# EUROPEAN PATENT APPLICATION

(11) **EP 4 800 325 A1**
(43) Date of publication of application: **02.09.2026**
(21) Application number: 25852588.0
(22) Date of filing: 27.10.2025
(51) Int. Cl.: F25B 41/26, F16K 11/087, F25B 1/00, F25B 13/00, F25B 41/24, F25B 47/02

(54) **AIR CONDITIONER**

(30) Priority: 17.12.2024 JP 2024221129
(71) Applicant: DAIKIN INDUSTRIES, LTD., Osaka-Shi, Osaka 530-0001 (JP)
(72) Inventor: OKUNO, Masato, Osaka-shi, Osaka 530-0001 (JP); HARAGUCHI, Yuu, Osaka-shi, Osaka 530-0001 (JP); TAKAHASHI, Ken, Osaka-shi, Osaka 530-0001 (JP)
(74) Representative: Hoffmann Eitle
(86) International application number: PCT/JP2025/037536
(87) International publication number: WO 2026/133735

(57) **Abstract**

An air conditioner capable of suppressing inflow of a refrigerant into a heat exchanger as necessary is provided. An air conditioner 1 includes a refrigerant circuit including a utilization heat exchanger (22) having a connection portion (22a) into which a refrigerant flows and a connection portion (22b) from which the refrigerant flows out, and a flow path switching valve (100). A flow path switching valve includes a body (120) in which a first space (V1) is formed and ports (122a to 122d) are provided on an inner wall (122), and a valve body (140) disposed in the first space and forming a first flow path (R1) through which the refrigerant flows. The port (122b) communicates with the connection portion (22a), and the port (122c) communicates with the connection portion (22b). In the valve body (140), the first flow path is switched to a state of connecting the port (122a) and the port (122b), a state of connecting the port (122a) and the port (122c), and a state (S3) of connecting the port (122b) and the port (122c), and the ports to which the first flow path is not connected in each state are connected by a second flow path (R2) formed in the first space.

## Description

### TECHNICAL FIELD

The present disclosure relates to an air conditioner.

### BACKGROUND ART

A vapor compression type air conditioner includes two heat exchangers (a radiator and a heat absorber) (for example, Patent Literature 1 (Japanese Laid-Open Patent Publication No. S59-170662 A)).

### SUMMARY OF THE INVENTION

### <Technical Problem>

Such an air conditioner is normally in a state where the refrigerant can flow to both heat exchangers, but in some circumstances, it may be preferable that the refrigerant does not flow to the heat exchangers.

For example, an air conditioner disclosed in Patent Literature 1 (Japanese Laid-Open Patent Publication No. S59-170662 A) performs a reverse cycle defrost operation, but at this time, a low-temperature refrigerant flows through a heat exchanger disposed in an air conditioning target space. Therefore, there is a possibility that the heat exchanger disposed in the air conditioning target space is cooled during the defrost operation or the air in the air conditioning target space is cooled by the refrigerant flowing through the heat exchanger disposed in the air conditioning target space although a heating operation is required.

### <Solution To Problem>

An air conditioner according to a first aspect includes a refrigerant circuit. In the refrigerant circuit, a compressor, a first heat exchanger, an expansion valve, and a second heat exchanger are connected by a refrigerant pipe. The first heat exchanger has a first connection portion and a second connection portion configured as inlet and outlet ports for the refrigerant. An air conditioner includes a flow path switching valve and a controller. The flow path switching valve includes a body, a valve body, and an actuator. A first space is formed inside the body. A first port, a second port, a third port, and a fourth port configured as inlet and outlet ports for the refrigerant are provided on a wall defining the first space of the body. The valve body is disposed inside the first space. The valve body forms a first flow path through which the refrigerant flows. The actuator is configured to drive the valve body. The controller is configured to control the actuator. The first heat exchanger is configured such that the refrigerant flows in from the first connection portion and flows out from the second connection portion. The second port communicates with the first connection portion of the first heat exchanger, and the third port communicates with the second connection portion of the first heat exchanger. The controller is configured to control the actuator to switch the state of the valve body to a first state in which the first port and the second port are connected by the first flow path, a second state in which the first port and the third port are connected by the first flow path, and a third state in which the second port and the third port are connected by the first flow path. A second flow path formed in the first space is configured to connect the third port and the fourth port in the first state, connect the second port and the fourth port in the second state, and connect the first port and the fourth port in the third state.

In the air conditioner according to the first aspect, the valve body of the flow path switching valve that controls the flow of the refrigerant flowing through the first heat exchanger can be brought into the third state (in other words, the first heat exchanger is disconnected from other portions of the refrigerant circuit) that connects the inlet port and the outlet port of the refrigerant in the first heat exchanger. Thus, in the air conditioner according to the first aspect, inflow of the refrigerant into the first heat exchanger can be suppressed when inflow thereto is not desired.

An air conditioner according to a second aspect is the air conditioner according to the first aspect, in which the first flow path includes an internal flow path formed inside the valve body. The internal flow path is configured to connect the first port and the second port in the first state, connect the first port and the third port in the second state, and connect the second port and the third port in the third state.

In the air conditioner according to the second aspect, since the internal flow path formed inside the valve body is used as the first flow path, it is possible to suppress the refrigerant from flowing out of the first flow path to the outside of the first flow path and the refrigerant from flowing into the first flow path from the outside of the first flow path.

An air conditioner according to a third aspect is the air conditioner according to the first or second aspect, in which the actuator is configured to rotate the valve body around the rotation axis to switch the state of the valve body among the first state, the second state, and the third state.

In the air conditioner according to the third aspect, the connection state of the three different flow paths can be implemented by the flow path switching valve having a relatively simple structure.

An air conditioner according to a fourth aspect is the air conditioner according to any one of the first to third aspects, in which an inner diameter of the fourth port is smaller than an inner diameter of the first port, an inner diameter of the second port, and an inner diameter of the third port.

Since the inner diameter of the fourth port is smaller than that of the other ports, the degree of freedom in arrangement of the fourth port can be increased. Further, by reducing the diameter of a refrigerant pipe communicating with the fourth port in accordance with the inner diameter of the fourth port, the degree of freedom of a pipe path of a refrigerant pipe connected to the flow path switching valve can be increased.

An air conditioner according to a fifth aspect is the air conditioner according to any one of the second to fourth aspects, and further includes a seal member. The seal member is provided so as to surround each of the opening of the first port, the opening of the second port, and the opening of the third port. The seal member is configured to seal between the opening of the port and the valve body when the first port, the second port, and the third port are connected to the internal flow path.

In the air conditioner according to the fifth aspect, the seal member can suppress a situation in which the refrigerant flows out from the port connected by the internal flow path to the first space around the valve body or the refrigerant flows from the first space around the valve body to the port connected by the internal flow path, thereby achieving an efficient air conditioner.

An air conditioner according to a sixth aspect is the air conditioner according to the fifth aspect, in which sizes of seal members provided in the first port, the second port, and the third port are common.

In the air conditioner according to the sixth aspect, the seal member has a common size, so that the same sealing performance can be obtained in any of the first state to the third state of the valve body.

An air conditioner according to a seventh aspect is the air conditioner according to any one of the first to sixth aspects, in which the first port and the fourth port communicate with each other not via the first heat exchanger but via the second heat exchanger in which the refrigerant flowing inside and a fluid of a heat source exchange heat. The second port and the third port communicate with each other via the first heat exchanger in which the refrigerant flowing inside and air in an air conditioning target space exchange heat.

An air conditioner according to an eighth aspect is the air conditioner according to the seventh aspect, in which the controller is configured to control the actuator to switch the valve body to the third state during defrost operation for defrosting the second heat exchanger.

In the air conditioner according to the eighth aspect, by the valve body becoming the third state during the defrost operation, it is possible to suppress occurrence of a situation in which, when the heating operation is required, the first heat exchanger and the air in the air conditioning target space that exchanges heat with the first heat exchanger are cooled by the refrigerant.

An air conditioner according to a ninth aspect is the air conditioner according to the seventh or eighth aspect, in which the controller is configured to control the actuator so that the valve body is in the third state after a pump-down operation of recovering the refrigerant to the second heat exchanger.

In the air conditioner according to the ninth aspect, the valve body is in the third state after the pump-down operation, so that the refrigerant recovered on the second heat exchanger side can be prevented from flowing into the first heat exchanger.

An air conditioner according to a tenth aspect is the air conditioner according to any one of the first to ninth aspects, in which the valve body has a ball shape in which at least a part of an outer surface is a spherical surface.

### BRIEF DESCRIPTION OF THE DRAWINGS

FIG. 1 is a schematic configuration diagram of an air conditioner according to an embodiment.
FIG. 2 is a schematic external view of a flow path switching valve of the air conditioner in FIG. 1.
FIG. 3 is a side view of illustrating the inside of the flow path switching valve.
FIG. 4 is another side view of in which the inside of the flow path switching valve as viewed from a direction different from that of FIG. 3 is drawn.
FIG. 5A is a view of a valve body of the flow path switching valve as viewed from a side opposite to a flat surface portion of the flow path switching valve.
FIG. 5B is a view of the valve body of FIG. 5A as viewed from a direction different from that of FIG. 5A.
FIG. 6A is a schematic view illustrating the inside of the flow path switching valve when the state of the valve body is a first state.
FIG. 6B is a schematic view illustrating the inside of the flow path switching valve when the state of the valve body is a second state.
FIG. 6C is a schematic view illustrating the inside of the flow path switching valve when the state of the valve body is a third state.
FIG. 7A is a diagram showing a flow of a refrigerant in a refrigerant circuit during cooling operation.
FIG. 7B is a diagram showing the flow of the refrigerant in the refrigerant circuit during heating operation.
FIG. 7C is a diagram showing a flow of the refrigerant in the refrigerant circuit during defrost operation.

### DESCRIPTION OF EMBODIMENTS

An air conditioner 1 according to an embodiment will be described with reference to the drawings.

### (1) Overview

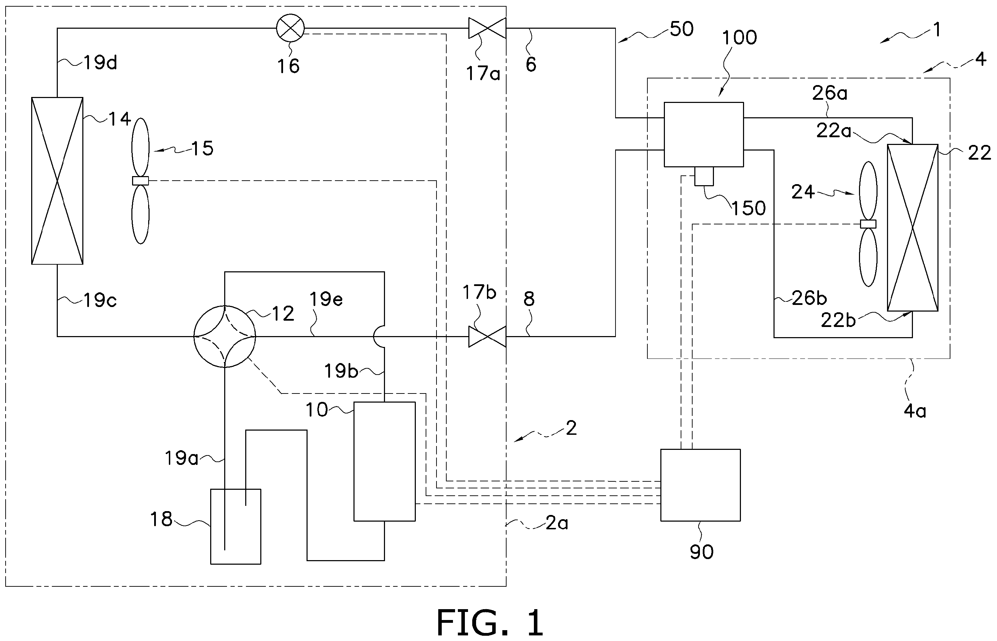

An outline of the air conditioner 1 will be described with reference to FIG. 1.

The air conditioner 1 cools and heats an interior (air conditioning target space) of a house, a building, or the like. The air conditioner 1 mainly includes a heat source unit 2, a utilization unit 4, and a control unit 90 (see FIG. 1). Note that, in the example of FIG. 1, the number of utilization units 4 is one, but the number of utilization units 4 may be plural.

As shown in FIG. 1, the heat source unit 2 and the utilization units 4 are connected by connection pipes 6 and 8. In the air conditioner 1, the heat source unit 2 and the utilization unit 4 are connected through the connection pipes 6 and 8 to constitute a refrigerant circuit 50. The refrigerant circuit 50 includes a compressor 10, a flow path switching mechanism 12, a heat source heat exchanger 14, an expansion valve 16, an accumulator 18, a liquid shutoff valve 17a, a gas shutoff valve 17b, a utilization heat exchanger 22, and a flow path switching valve 100.

The refrigerant circuit 50 is filled with a refrigerant having a temperature glide such as, but not limited to, R454C. However, the refrigerant charged in the refrigerant circuit 50 is not limited to the refrigerant of R454C. Further, the refrigerant charged in the refrigerant circuit 50 is not limited to a refrigerant having a temperature glide. The refrigerant to be charged in the refrigerant circuit 50 may be appropriately selected.

Note that the flow path switching valve 100 is a device that causes the refrigerant to flow in the same direction to the utilization heat exchanger 22 during the cooling operation and the heating operation. Further, the flow path switching valve 100 is a device for preventing the refrigerant from flowing to the utilization heat exchanger 22 as necessary.

### (2) Detailed configuration

### (2-1) Heat source unit

The heat source unit 2 is installed on a rooftop of a building where the air conditioner 1 is installed, a machine room, or the like.

As shown in FIG. 1, the heat source unit 2 mainly includes the compressor 10, the flow path switching mechanism 12, the heat source heat exchanger 14, the expansion valve 16, the accumulator 18, the liquid shutoff valve 17a, the gas shutoff valve 17b, and a heat source fan 15. The various devices 10, 12, 14, 16, 18, 17a, 17b, and 15 of the heat source unit 2 are housed in a housing 2a.

A suction pipe 19a connects the flow path switching mechanism 12 and the suction side of the compressor 10. The suction pipe 19a is provided with the accumulator 18. A discharge pipe 19b connects a discharge side of the compressor 10 and the flow path switching mechanism 12. A first gas pipe 19c connects the flow path switching mechanism 12 and a gas side end of the heat source heat exchanger 14. A liquid pipe 19d connects the liquid side end of the heat source heat exchanger 14 and the liquid connection pipe 6. The expansion valve 16 is provided in the liquid pipe 19d. The liquid shutoff valve 17a is provided at a connection portion between the liquid pipe 19d and the liquid connection pipe 6. A second gas pipe 19e connects the flow path switching mechanism 12 and the gas connection pipe 8. The gas shutoff valve 17b is provided at a connection portion between the second gas pipe 19e and the gas connection pipe 8. The liquid shutoff valve 17a and the gas shutoff valve 17b are manually opened and closed, and are opened when the air conditioner 1 is in operation.

The compressor 10 sucks a low-pressure refrigerant in a refrigeration cycle from the suction pipe 19a, compresses the refrigerant by a compression mechanism (not shown), and discharges the compressed high-pressure refrigerant in the refrigeration cycle to the discharge pipe 19b. The compressor 10 is not limited in terms of a type, and is, for example, a rotary type or scroll type positive displacement compressor. The compression mechanism of the compressor 10 is driven by a motor (not shown). The compressor 10 is an inverter compressor. However, the compressor 10 may be a constant-speed compressor.

The flow path switching mechanism 12 switches a flow path of the refrigerant between a first circuit state and a second circuit state. In other words, the flow path switching mechanism 12 switches the destination of the refrigerant to be discharged from the compressor between the heat source heat exchanger 14 and the utilization heat exchanger 22. In the first circuit state, the flow path switching mechanism 12 causes the suction pipe 19a to communicate with the second gas pipe 19e and causes the discharge pipe 19b to communicate with the first gas pipe 19c as indicated by a solid line in the flow path switching mechanism 12 in FIG. 1. In the second circuit state, the flow path switching mechanism 12 causes the suction pipe 19a to communicate with the first gas pipe 19c and causes the discharge pipe 19b to communicate with the second gas pipe 19e as indicated by a broken line in the flow path switching mechanism 12 in FIG. 1.

A type of the flow path switching mechanism 12 is not limited, and is, for example, a four-way switching valve (electromagnetic operation valve, electromagnetic pilot switching valve, or the like). However, it is not limited thereto, and the flow path switching mechanism 12 may be a mechanism that includes a plurality of electromagnetic valves connecting pipes and switches the flow path of the refrigerant between the first circuit state and the second circuit state by operating the plurality of electromagnetic valves.

The flow path switching mechanism 12 brings the flow path of the refrigerant into the first circuit state during the cooling operation. At this time, the refrigerant discharged from the compressor 10 flows through the refrigerant circuit 50 in the order of the heat source heat exchanger 14, the expansion valve 16, the flow path switching valve 100, the utilization heat exchanger 22, and the flow path switching valve 100, and returns to the compressor 10. In the first circuit state, the heat source heat exchanger 14 functions as a radiator (condenser), and the utilization heat exchanger 22 functions as a heat absorber (evaporator).

The flow path switching mechanism 12 brings the flow path of the refrigerant into the second circuit state during the heating operation. At this time, the refrigerant discharged from the compressor 10 flows through the refrigerant circuit 50 through the flow path switching valve 100, the utilization heat exchanger 22, the flow path switching valve 100, the expansion valve 16, and the heat source heat exchanger 14 in this order, and returns to the compressor 10. In the second circuit state, the heat source heat exchanger 14 functions as a heat absorber (evaporator), and the utilization heat exchanger 22 functions as a radiator (condenser).

The heat source heat exchanger 14 causes heat exchange between the refrigerant flowing inside the heat source heat exchanger 14 and air around the heat source unit 2. The heat source heat exchanger 14 is, for example, a fin-and-tube heat exchanger including a plurality of heat transfer fins and a plurality of heat transfer tubes. Note that the substance with which the refrigerant exchanges heat in the heat source heat exchanger 14 is not limited to air, and may be liquid such as water. In a case where the refrigerant exchanges heat with a liquid, a heat exchanger of a type suitable for heat exchange between the liquid and the refrigerant may be selected as the heat source heat exchanger 14.

The expansion valve 16 is a mechanism for adjusting the pressure and flow rate of the refrigerant flowing through the liquid pipe 19d. The expansion valve 16 is provided in the liquid pipe 19d. The expansion valve 16 is, for example, an electric valve (electronic expansion valve) whose opening degree can be adjusted. However, the type of the expansion valve 16 is not limited to the electric valve, and may be an automatic temperature expansion valve or the like.

The accumulator 18 is a container provided in the suction pipe 19a and having a gas-liquid separation function of separating an inflowing refrigerant into a gas refrigerant and a liquid refrigerant. A refrigerant flowing into the accumulator 18 is separated into a gas refrigerant and a liquid refrigerant, and the gas refrigerant collecting in an upper space flows into the compressor 10.

The heat source fan 15 supplies air as a heat source around the heat source unit 2 to the heat source heat exchanger 14. The heat source fan 15 is, for example, an axial fan such as a propeller fan although the type of the fan is not limited. The heat source fan 15 is driven by a motor (not shown).

The heat source unit 2 further includes a heat source control unit (not shown). The heat source control unit includes an arithmetic and control device and a storage device. The arithmetic and control device is a processor such as a CPU and a GPU. The storage device is a storage medium such as a RAM, a ROM, and a flash memory. The arithmetic and control device reads a program stored in the storage device and performs predetermined calculation processing according to the program, thereby controlling operations of various devices of the air conditioner 1 as the control unit 90 in cooperation with a utilization control unit (not shown) of the utilization unit 4. The functions of the control unit 90 will be described later.

### (2-2) Utilization Unit

The utilization unit 4 is installed in the air conditioning target space to be air-conditioned. The utilization unit 4 may be a ceiling-embedded unit, a ceiling pendant unit, a wall-hung unit, a floor-standing unit, or the like.

As shown in FIG. 1, the utilization unit 4 mainly includes a utilization heat exchanger 22, a utilization fan 24, and a flow path switching valve 100. The utilization heat exchanger 22, the utilization fan 24, and the flow path switching valve 100 are housed in a housing 4a.

The utilization heat exchanger 22 causes heat exchange between the refrigerant flowing inside the utilization heat exchanger 22 and air in the air conditioning target space. The utilization heat exchanger 22 is, for example, a fin-and-tube heat exchanger including a plurality of heat transfer fins and a plurality of heat transfer tubes.

The utilization heat exchanger 22 includes a first connection portion 22a and a second connection portion 22b configured as inlet and outlet ports for the refrigerant. By switching the flow path by the flow path switching valve 100 described later, the refrigerant flows into the utilization heat exchanger 22 from the first connection portion 22a and flows out from the second connection portion 22b both during the cooling operation and during the heating operation. By causing the refrigerant to flow through the utilization heat exchanger 22 in the same direction during both the cooling operation and the heating operation, it is possible to implement a state in which the flow direction of the air formed by the utilization fan 24 and the flow direction of the refrigerant are opposite flows during both the cooling operation and the heating operation. As a result, the heat exchange efficiency of the utilization heat exchanger 22 can be maintained high in both the cooling operation and the heating operation.

The utilization fan 24 supplies the air taken in from the air conditioning target space to the utilization heat exchanger 22. Examples of the utilization fan 24 include a centrifugal fan such as a turbo fan and a sirocco fan. The utilization fan 24 is driven by a motor (not shown).

The flow path switching valve 100 switches the flow direction of the refrigerant in the utilization heat exchanger 22. Specifically, the flow path switching valve 100 controls the flow of the refrigerant so that the refrigerant flows in from the first connection portion 22a of the utilization heat exchanger 22 and flows out from the second connection portion 22b of the utilization heat exchanger 22 during both the cooling operation and the heating operation. Furthermore, the flow path switching valve 100 controls the flow of the refrigerant so that the refrigerant does not flow to the utilization heat exchanger 22 at a predetermined timing.

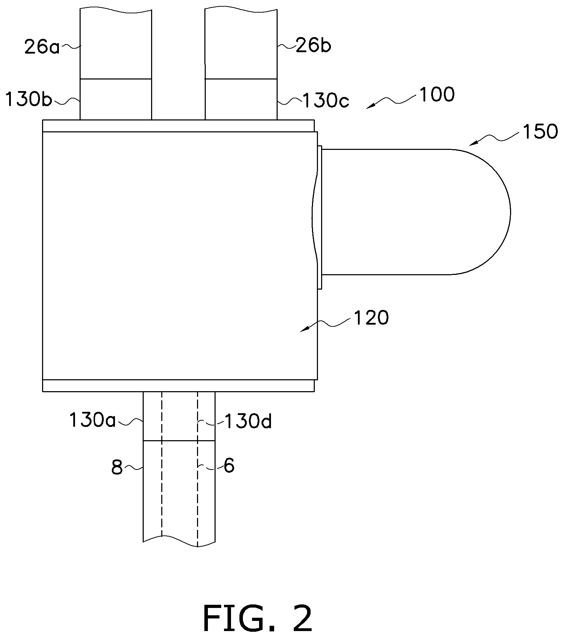

A first connection portion 130a, a second connection portion 130b, a third connection portion 130c, and a fourth connection portion 130d to which pipes are connected are provided on an outer surface of the flow path switching valve 100 (see FIG. 2). The gas connection pipe 8 (directly or via other piping) is connected to the first connection portion 130a. One end of the first pipe 26a is connected to the second connection portion 130b. The other end of the first pipe 26a is connected to the first connection portion 22a of the utilization heat exchanger 22. One end of the second pipe 26b is connected to the third connection portion 130c. The other end of the second pipe 26b is connected to the second connection portion 22b of the utilization heat exchanger 22. The liquid connection pipe 6 is connected to the fourth connection portion 130d (directly or via other piping).

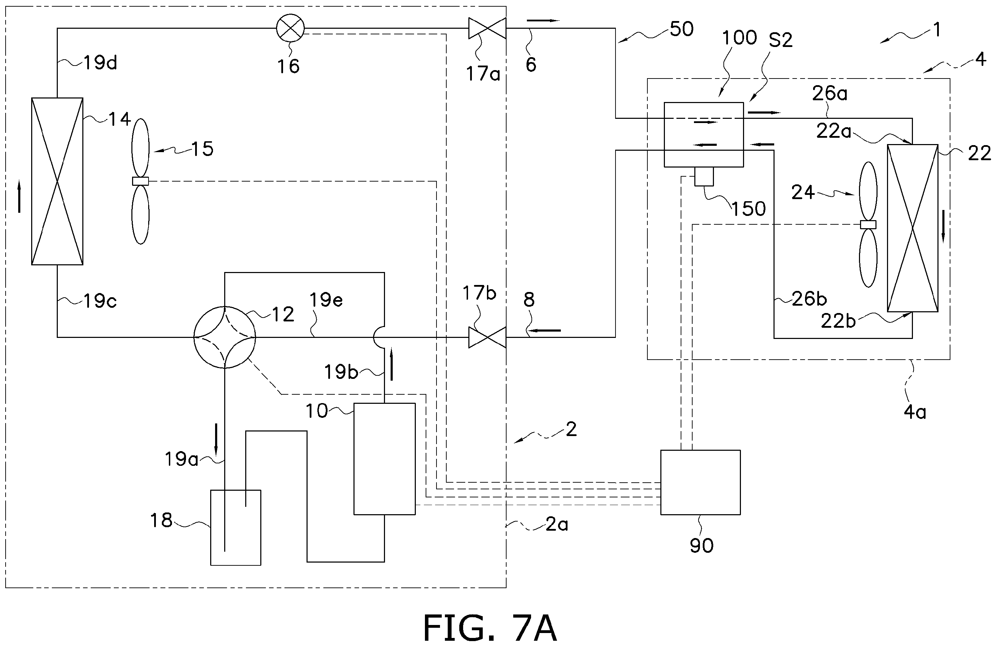

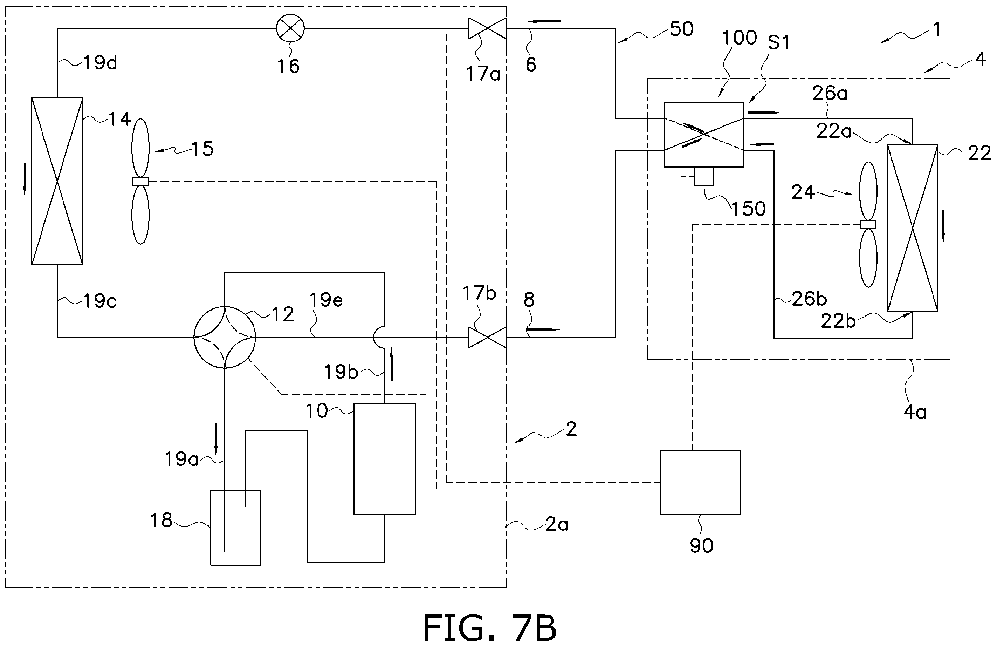

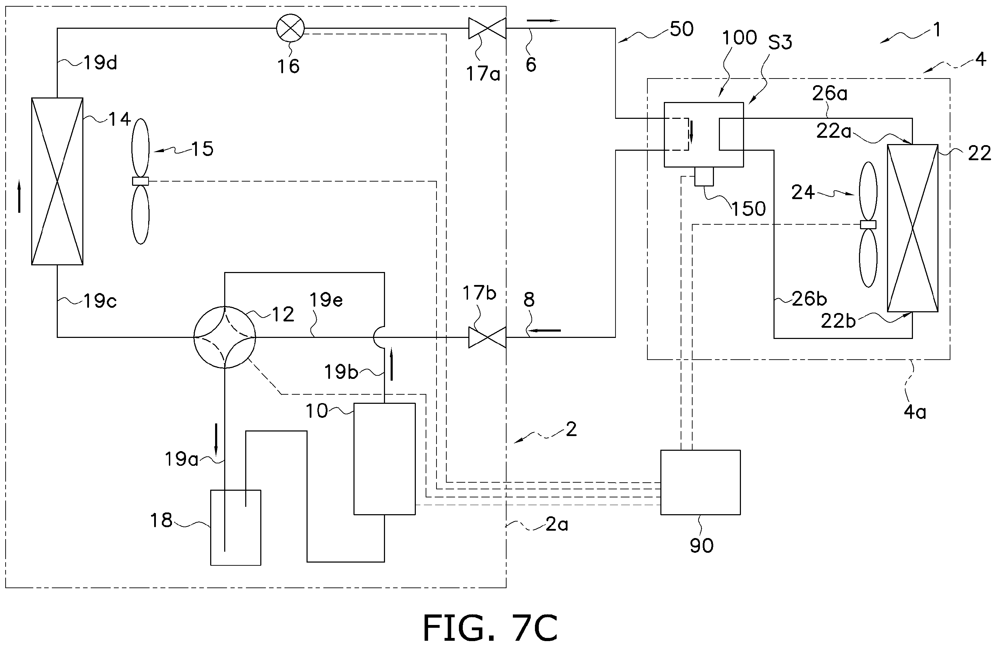

During the cooling operation, the flow path switching valve 100 causes the liquid connection pipe 6 and the first pipe 26a to communicate with each other, and causes the second pipe 26b and the gas connection pipe 8 to communicate with each other (see a solid line and a broken line in the flow path switching valve 100 of FIG. 7A). During the heating operation, the flow path switching valve 100 causes the liquid connection pipe 6 and the second pipe 26b to communicate with each other, and causes the first pipe 26a and the gas connection pipe 8 to communicate with each other (see a solid line and a broken line in the flow path switching valve 100 in FIG. 7B). When not flowing the refrigerant in the utilization heat exchanger 22, the flow path switching valve 100 causes the gas connection pipe 8 and the liquid connection pipe 6 to communicate with each other (directly via the flow path switching valve 100), and causes the first pipe 26a and the second pipe 26b to communicate with each other (directly via the flow path switching valve 100) (see a solid line and a broken line in the flow path switching valve 100 in FIG. 7C).

A specific example of the structure of the flow path switching valve 100 will be described later.

The utilization unit 4 further includes a utilization control unit (not shown). The utilization control unit includes a arithmetic and control device and a storage device. The arithmetic and control device is a processor such as a CPU and a GPU. The storage device is a storage medium such as a RAM, a ROM, and a flash memory. The arithmetic and control device reads a program stored in the storage device, and performs predetermined calculation processing according to the program, thereby controlling the operation of the various devices of the air conditioner 1 as the control unit 90 in cooperation with the heat source control unit of the heat source unit 2. The functions of the control unit 90 will be described later.

### (2-2-1) (Details of flow path switching valve)

A specific example of the structure of the flow path switching valve 100 will be described with reference to the drawings.

As shown in FIGS. 2 to 4, the flow path switching valve 100 mainly includes a body 120, a valve body 140, an actuator 150, a transmission unit 155, and a seal member 160.

The body 120 has a cylindrical outer shape. Note that the body 120 may have an appropriately selected shape not limited to the cylindrical shape. For example, the outer shape of the body 120 may be a rectangular parallelepiped shape.

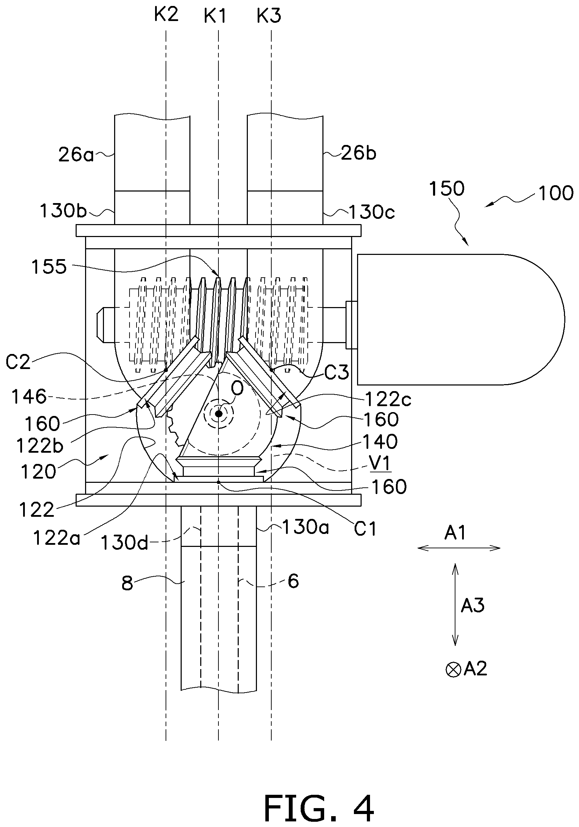

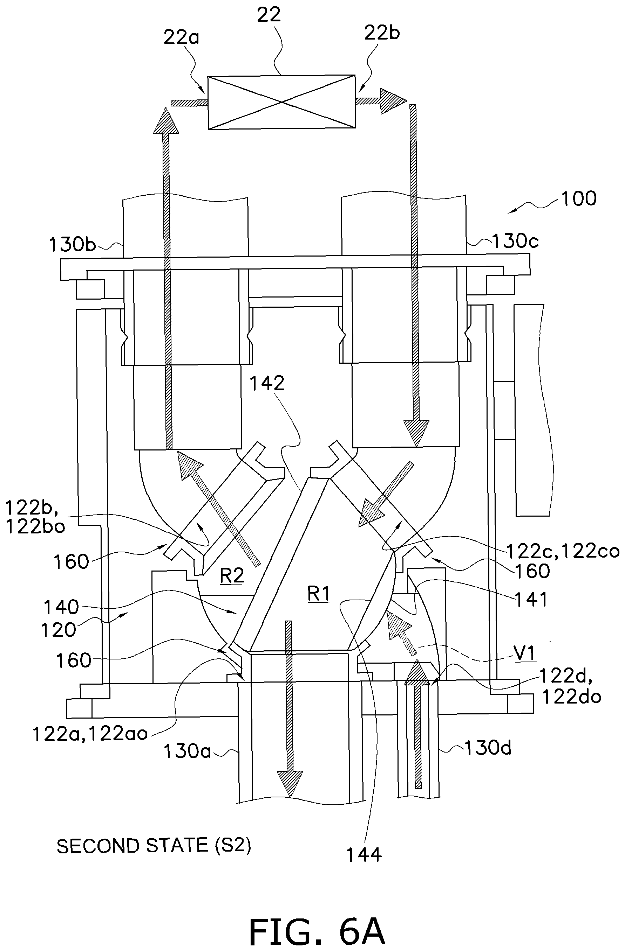

On the outer surface of the body 120, a first connection portion 130a, a second connection portion 130b, a third connection portion 130c, and a fourth connection portion 130d are provided (see FIG. 2). In the present embodiment, the first connection portion 130a and the fourth connection portion 130d are provided on a flat surface (bottom surface) of one end portion of the cylindrical body 120, and the second connection portion 130b and the third connection portion 130c are provided on a flat surface (bottom surface) of the other end portion. In the present embodiment, as shown in FIG. 4, the second connection portion 130b and the third connection portion 130c are arranged side by side in a predetermined direction (referred to as a first arrangement direction A1) on one end surface of the cylindrical body 120, and the first connection portion 130a and the fourth connection portion 130d are arranged side by side in a second arrangement direction A2 (although not limited, here, a direction orthogonal to the first arrangement direction A1, which is a direction perpendicular to the paper surface in FIG. 4) intersecting the first arrangement direction A1 on the other end surface of the cylindrical body 120. Note that, in FIGS. 6A to 6C, the first connection portion 130a and the fourth connection portion 130d are illustrated in a manner aligned in the same direction as the second connection portion 130b and the third connection portion 130c from the viewpoint of easy understanding of the drawings.

Note that the arrangement of the first connection portion 130a, the second connection portion 130b, the third connection portion 130c, and the fourth connection portion 130d may be appropriately selected. For example, any or all of the first connection portion 130a, the second connection portion 130b, the third connection portion 130c, and the fourth connection portion 130d may be provided on the side surface (curved surface) of the body 120 instead of the end surface. In addition, for example, the second connection portion 130b and the third connection portion 130c may be arranged side by side along the direction along the first arrangement direction A1.

As shown in FIG. 4, a first space V1 is formed inside the body 120. The first space V1 is a space in which the valve body 140 is accommodated. Further, a second flow path R2 through which the refrigerant flows is formed in the first space V1. A first port 122a, a second port 122b, a third port 122c, and a fourth port 122d configured as inlet and outlet ports for the refrigerant are provided on the wall 122 defining the first space V1 (surrounding the first space V1). Here, the first port 122a means a distal end portion of a hole facing the first space V1. The hole seen when the first port 122a is viewed from the first space V1 is referred to as an opening 122ao of the first port 122a here. The same applies to the second port 122b to the fourth port 122d.

The first port 122a communicates with the first connection portion 130a via a passage (reference numeral is omitted) formed in the body 120. The second port 122b communicates with the second connection portion 130b via a passage (reference numeral is omitted) formed in the body 120. The third port 122c communicates with the third connection portion 130c via a passage (reference numeral is omitted) formed in the body 120. The fourth port 122d communicates with the fourth connection portion 130d via a passage (reference numeral is omitted) formed in the body 120.

As can be seen from FIG. 1, the first port 122a communicating with the first connection portion 130a connected to the gas connection pipe 8 and the fourth port 122d communicating with the fourth connection portion 130d connected to the liquid connection pipe 6 communicate with each other not via the utilization heat exchanger 22 but via the heat source heat exchanger 14 in which the refrigerant flowing inside and the fluid of the heat source exchange heat. The second port 122b communicating with the second connection portion 130b to which the first pipe 26a is connected and the third port 122c communicating with the third connection portion 130c to which the second pipe 26b is connected communicate with each other via the utilization heat exchanger 22 in which the refrigerant flowing inside and the air in the air conditioning target space exchange heat.

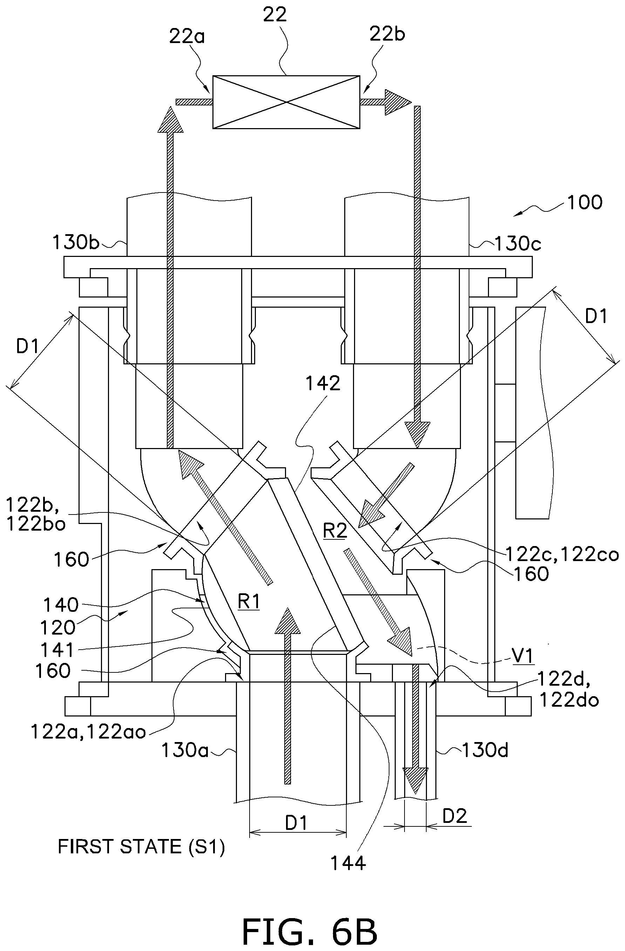

The inner diameter of the first port 122a, the inner diameter of the second port 122b, and the inner diameter of the third port 122c are the same (D1) (see FIG. 6B). However, it is not limited thereto, and the inner diameter of the first port 122a, the inner diameter of the second port 122b, and the inner diameter of the third port 122c may be different. Although not limited, the inner diameter (D2) of the fourth port 122d through which the liquid refrigerant mainly flows may be smaller than the inner diameter (D1) of the first port 122a, the second port 122b, and the third port 122c (see FIG. 6B).

The valve body 140 is disposed in the first space V1 formed by the body 120.

The valve body 140 is driven by a motor as an example of the actuator 150 and rotates around the rotation axis O. In the present embodiment, the rotation axis O extends in a direction (here, the second arrangement direction A2) orthogonal to the first arrangement direction A1 and the third arrangement direction A3 (see FIG. 4). The first arrangement direction A1 is a direction in which the second port 122b and the third port 122c are arranged side by side. Here, the first arrangement direction A1 is also a direction in which the second connection portion 130b and the third connection portion 130c are arranged side by side as described above. Note that the direction in which the second port 122b and the third port 122c are arranged and the direction in which the second connection portion 130b and the third connection portion 130c are arranged need not be the same, but when the direction in which the second port 122b and the third port 122c are arranged and the direction in which the second connection portion 130b and the third connection portion 130c are arranged are made to coincide with each other, the structure of the flow path switching valve 100 is easily simplified. Here, the third arrangement direction A3 is a height direction of the cylindrical body 120.

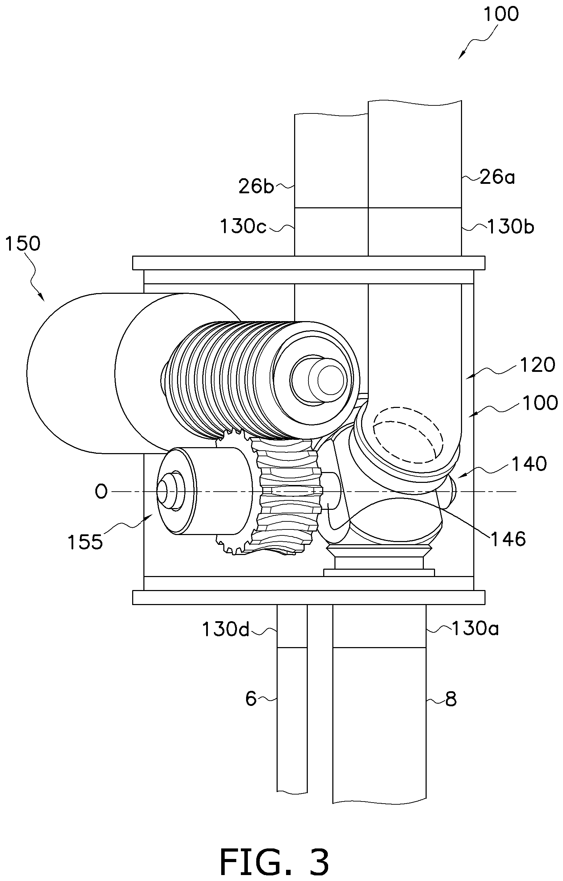

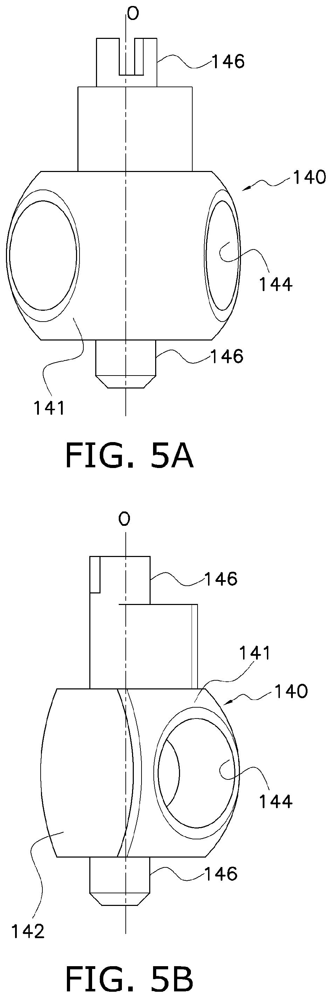

Note that the actuator 150 that rotates the valve body 140 and the shaft 146 (a shaft that is attached to (integrated with) the valve body 140 to rotate the valve body 140 and is supported by a bearing (not shown), see FIGS. 5A and 5B) attached to the valve body 140 and extending along the direction of the rotation axis O are connected by a transmission unit 155. In the present embodiment, as shown in FIG. 3, a worm gear is used as the transmission unit 155. However, the type of transmission mechanism used as the transmission unit 155 (the type of mechanism that transmits the force of the actuator 150 to the shaft 146) may be appropriately selected.

The valve body 140 is rotated with respect to the body 120 around the rotation axis O by the actuator 150 to change the flow of the refrigerant in the flow path switching valve 100.

Specifically, the valve body 140 forms a first flow path R1 through which the refrigerant flows. In the present embodiment, the first flow path R1 includes an internal flow path 144 (surrounded by the valve body 140) formed inside the valve body 140. When the actuator 150 rotates the valve body 140, the ports of the body 120 communicated by the first flow path R1 (internal flow path 144) is changed, so that the valve body 140 changes the flow of the refrigerant in the flow path switching valve 100.

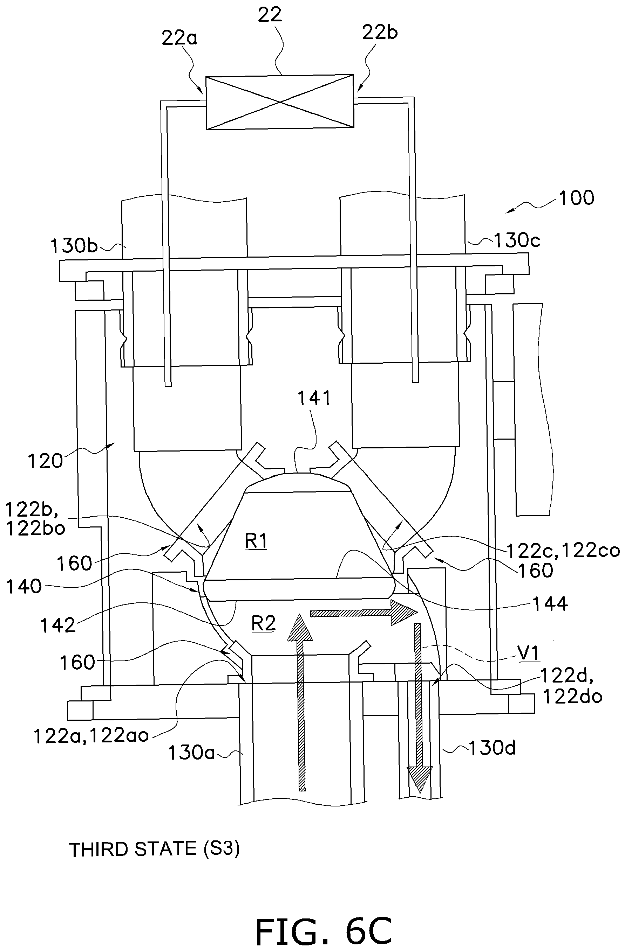

Specifically, by rotating around the rotation axis O, the valve body 140 can take a first state S1 (see FIG. 6B) in which the first port 122a and the second port 122b are connected by the first flow path R1, a second state S2 (see FIG. 6A) in which the first port 122a and the third port 122c are connected by the first flow path R1, and a third state S3 (see FIG. 6C) in which the second port 122b and the third port 122c are connected by the first flow path R1.

Note that, when the valve body 140 is in the first state S1, the second state S2, and the third state S3, the second flow path R2 is formed outside the valve body 140 (part of the first space V1 where the valve body 140 does not exist (periphery of the valve body 140)).

When the valve body 140 is in the first state S1, the third port 122c and the fourth port 122d are connected by the second flow path R2 (see FIG. 6B). When the valve body 140 is in the second state S2, the second port 122b and the fourth port 122d are connected by the second flow path R2 (see FIG. 6A). Note that, in the example illustrated in FIG. 6A, the flow of the refrigerant appears to be obstructed by the valve body 140 in the drawing, but actually, the refrigerant flowing in from the fourth port 122d flows through the space existing in front of or behind the valve body 140 in the direction perpendicular to the paper surface as the second flow path R2 to be directed to the second port 122b. When the valve body 140 is in the third state S3, the first port 122a and the fourth port 122d are connected by the second flow path R2.

The valve body 140 is a ball type. The ball shape of the valve body means that at least a part of the outer surface of the valve body is a spherical surface (indicated by reference numeral 141). Although the shape of the valve body 140 is not limited, the valve body has a hemispherical shape, and has a shape in which both ends in the extending direction of the rotation axis O are cut off in a direction orthogonal to the rotation axis O. The internal flow path 144 constituting the first flow path R1 extends so as to penetrate the valve body 140 in a direction intersecting (here, orthogonal to) the rotation axis O. The spherical surface 141 of the hemispherical valve body 140, a flat surface 142 disposed on the side opposite to the spherical surface 141, and the wall 122 of the body 120 form the second flow path R2.

A seal member 160 may be provided in the opening 122ao of the first port 122a, an opening 122bo of the second port 122b, and an opening 122co of the third port 122c, to which the internal flow path 144 (first flow path R1) of the valve body 140 is connected, so as to surround the openings 122ao, 122bo, and 122co. The seal member 160 is an annular member (packing). The seal member 160 is disposed so as to surround openings 122ao, 122bo, and 122co. A material of the seal member 160 is not limited, and is made of, for example, fluororesin such as polytetrafluoroethylene (PTFE). When the valve body 140 rotates around the rotation axis O, the spherical surface 141 of the valve body 140 moves while sliding on the seal member 160. Note that the material and shape of the seal member 160 may be appropriately selected.

When the valve body 140 is in the first state S1 and the first port 122a and the second port 122b are connected by the internal flow path 144, a space between the opening 122ao of the first port 122a and the valve body 140 is sealed by the seal member 160 disposed so as to surround the opening 122ao of the first port 122a, and a space between the opening 122bo of the second port 122b and the valve body 140 is sealed by the seal member 160 disposed so as to surround the opening 122bo of the second port 122b. When the valve body 140 is in the second state S2 and the first port 122a and the third port 122c are connected by the internal flow path 144, a space between the opening 122ao of the first port 122a and the valve body 140 is sealed by the seal member 160 disposed so as to surround the opening 122ao of the first port 122a, and a space between the opening 122co of the third port 122c and the valve body 140 is sealed by the seal member 160 disposed so as to surround the opening 122co of the third port 122c. When the valve body 140 is in the third state S3 and the second port 122b and the third port 122c are connected by the internal flow path 144, a space between the opening 122bo of the second port 122b and the valve body 140 is sealed by the seal member 160 disposed so as to surround the opening 122bo of the second port 122b, and a space between the opening 122co of the third port 122c and the valve body 140 is sealed by the seal member 160 disposed so as to surround the opening 122co of the third port 122c.

Note that, because the valve body 140 has the first state S1, the second state S2, and the third state S3, there is a timing at which the openings at both ends of the internal flow path 144 are connected to all of the first port 122a, the second port 122b, and the third port 122c. Thus, the sizes of the seal members 160 provided in the first port 122a, the second port 122b, and the third port 122c may be common so that the same sealed state can be obtained regardless of the state of the valve body 140. In particular, the inner diameter of the annular seal member 160 is preferably common to the seal members 160 provided in the first port 122a, the second port 122b, and the third port 122c. Further, the seal members 160 provided in the first port 122a, the second port 122b, and the third port 122c may be the same (the same size and the same shape).

Note that, when the first port 122a, the second port 122b, and the third port 122c in the flow path switching valve 100 are viewed along the rotation axis O, at least a part of the first port 122a is disposed between an imaginary line K2 passing through the center C2 of the opening 122bo of the second port 122b in the first arrangement direction A1 and extending in the third arrangement direction A3 and an imaginary line K3 passing through the center C3 of the opening 122co of the third port 122c in the first arrangement direction A1 and extending in the third arrangement direction A3. The third arrangement direction A3 is a direction orthogonal to the first arrangement direction A1 and the extending direction of the rotation axis O. More preferably, when the first port 122a, the second port 122b, and the third port 122c are viewed along the rotation axis O, at least a part of the first port 122a is disposed between an imaginary line (not shown) passing through a center (not shown) in the first arrangement direction A1 of the opening of the seal member 160 provided in the opening 122bo of the second port 122b and extending in the third arrangement direction A3 and an imaginary line (not shown) passing through a center (not shown) in the first arrangement direction A1 of the opening of the seal member 160 provided in the opening 122co of the third port 122c and extending in the third arrangement direction A3.

By adopting such a structure, even when the refrigerant flows from the first connection portion 130a to the second connection portion 130b, or when the refrigerant flows from the third connection portion 130c to the first connection portion 130a, the refrigerant can flow smoothly (without greatly changing the flow direction of the refrigerant) in the flow path switching valve 100, and an increase in pressure loss in the flow path switching valve 100 can be suppressed.

In particular, preferably, the center C1 of the opening 122ao of the first port 122a in the first arrangement direction A1 is disposed at the center between the imaginary line K2 and the imaginary line K3 in the first arrangement direction A1. More preferably, the center of the opening of the seal member 160 provided in the opening 122ao of the first port 122a in the first arrangement direction A1 is disposed at the center between an imaginary line (not shown) passing through the center of the opening of the seal member 160 provided in the opening 122bo of the second port 122b in the first arrangement direction A1 and extending in the third arrangement direction A3 and an imaginary line (not shown) passing through the center of the opening of the seal member 160 provided in the opening 122co of the third port 122c in the first arrangement direction A1 and extending in the third arrangement direction A3. Further, when viewed along the rotation axis O, the rotation axis O of the valve body 140 is disposed on an imaginary line K1 passing through the center C1 and extending in the third arrangement direction A3.

By adopting such a structure, both when the refrigerant flows from the first connection portion 130a to the second connection portion 130b and when the refrigerant flows from the third connection portion 130c to the first connection portion 130a, the refrigerant can flow smoothly in the flow path switching valve 100, and an increase in pressure loss in the flow path switching valve 100 can be suppressed. With such a configuration, when viewed along the rotation axis O, the structure on the second port 122b side of the body casing 120 can be made symmetrical to the structure on the third port 122c side of the body casing 120, and a structure with high sealability between the opening 122bo of the second port 122b and the valve body 140 and between the opening 122co of the third port 122c and the valve body 140 can be relatively easily achieved.

### (2-3) Control unit

The control unit 90 includes the utilization heat exchanger 22 of the heat source unit 2 and the utilization control unit of the utilization unit 4. Note that part or all of the control unit 90 may be configured by a device provided separately from the heat source unit 2 and the utilization unit 4.

The control unit 90 controls the entire operation of the air conditioner 1 by causing the arithmetic and control device to execute a program stored in the storage device.

As indicated by a broken line in FIG. 1, the control unit 90 is electrically connected to the utilization fan 24, the flow path switching valve 100, the compressor 10, the flow path switching mechanism 12, the expansion valve 16, and the heat source fan 15. Further, the control unit 90 is also electrically connected to various sensors (not shown) that measure the temperature and pressure of the refrigerant, the temperature of the air in the air conditioning target space, the outside air temperature, and the like. The control unit 90 controls the operation of the various devices of the air conditioner 1 on the basis of the control signals received by the utilization unit 4 from an operation remote controller (not shown), measurement signals of various sensors, and the like.

The control unit 90 mainly performs cooling operation, heating operation, and defrost operation.

### (2-3-1) Cooling operation

For example, when receiving an instruction to perform the cooling operation from the operation remote controller via the utilization unit 4, the control unit 90 brings the flow path switching mechanism 12 into the first circuit state, controls the actuator 150 of the flow path switching valve 100 to bring the state of the valve body 140 into the second state S2 (see FIG. 6A), and starts the operation of the compressor 10. Further, the number of rotations of the motor of the compressor 10 and opening degrees of the expansion valve 16 are appropriately controlled on the basis of a measurement result of a sensor that is provided in the refrigerant circuit 50 and measures the temperature and pressure of the refrigerant.

The flow of the refrigerant in the refrigerant circuit 50 will be described with reference to FIG. 7A. When the operation of the compressor 10 is started, a gas refrigerant having a low pressure in the refrigeration cycle (hereinafter simply referred to as low pressure) is sucked into the compressor 10 and compressed by the compression mechanism of the compressor 10 to become a gas refrigerant having a high pressure in the refrigeration cycle (hereinafter simply referred to as high pressure). The high-pressure gas refrigerant is sent to the heat source heat exchanger 14 via the flow path switching mechanism 12, exchanges heat with the air around the heat source unit 2 supplied by the heat source fan 15 to be condensed, and becomes a high-pressure liquid refrigerant. The high-pressure liquid refrigerant flows through the liquid pipe 19d, passes through the expansion valve 16, and is decompressed to near the suction pressure of the compressor 10, and becomes a refrigerant in a gas-liquid two-phase state. The refrigerant decompressed by expansion valve 16 is sent to the utilization unit 4 and flows into the flow path switching valve 100. The refrigerant having flowed into the flow path switching valve 100 from the liquid connection pipe 6 via the fourth connection portion 130d and the fourth port 122d flows through the second flow path R2 (indicated by the broken line in the flow path switching valve 100 in FIG. 7A), and flows into the utilization heat exchanger 22 from the first connection portion 22a via the second port 122b, the second connection portion 130b, and the first pipe 26a. The refrigerant in the gas-liquid two-phase state having flowed into the utilization heat exchanger 22 exchanges heat, in the utilization heat exchanger 22, with air in the air conditioning target space supplied into the utilization heat exchanger 22 by the utilization fan 24 to be evaporated into a low-pressure gas refrigerant. The low-pressure gas refrigerant flowing out of the utilization heat exchanger 22 flows out of the second connection portion 22b and flows into the flow path switching valve 100 from the third connection portion 130c via the second pipe 26b. The refrigerant flowing into the flow path switching valve 100 flows from the third port 122c through the internal flow path 144 (first flow path R1, indicated by the solid line in flow path switching valve 100 in FIG. 7A) of the valve body 140, and flows out to the gas connection pipe 8 via the first port 122a and the first connection portion 130a. The low-pressure gas refrigerant is sent to the heat source unit 2 via the gas connection pipe 8, and flows into the accumulator 18 via the flow path switching mechanism 12. The low-pressure gas refrigerant having flowed into the accumulator 18 is sucked into the compressor 10 again. Note that the temperature of the air supplied to the utilization heat exchanger 22 is lowered by heat exchange with the refrigerant flowing through the utilization heat exchanger 22, and the cooled air is blown into the air conditioning target space.

### (2-3-2) Heating operation

For example, when receiving an instruction to perform the heating operation from the operation remote controller via the utilization unit 4, the control unit 90 brings the flow path switching mechanism 12 into the second circuit state, controls the actuator 150 of the flow path switching valve 100 to bring the state of the valve body 140 into the first state S1 (see FIG. 6B), and starts the operation of the compressor 10. Further, the number of rotations of the motor of the compressor 10 and opening degrees of the expansion valve 16 are appropriately controlled on the basis of a measurement result of a sensor that is provided in the refrigerant circuit 50 and measures the temperature and pressure of the refrigerant.

The flow of the refrigerant in the refrigerant circuit 50 will be described with reference to FIG. 7B. When the compressor 10 is activated, a low-pressure gas refrigerant is sucked into the compressor 10 and is compressed by the compressor 10 into a high-pressure gas refrigerant. The high-pressure gas refrigerant is sent to the utilization unit 4 via the flow path switching mechanism 12 and flows into the flow path switching valve 100. The gas refrigerant flowing from the gas connection pipe 8 into the flow path switching valve 100 via the first connection portion 130a and the first port 122a flows through the first flow path R1 (indicated by the solid line in the flow path switching valve 100 in FIG. 7B), and flows into the utilization heat exchanger 22 from the first connection portion 22a via the second port 122b, the second connection portion 130b, and the first pipe 26a. The gas refrigerant sent to the utilization heat exchanger 22 exchanges heat with air in the air conditioning target space supplied to the utilization heat exchanger 22 by the utilization fan 24 to be condensed into a high-pressure liquid refrigerant. The temperature of the air supplied to the utilization heat exchanger 22 is risen by heat exchange with the refrigerant flowing through the utilization heat exchanger 22, and the heated air is blown into the air conditioning target space. The high-pressure liquid refrigerant flowing out of the utilization unit 4 flows out of the second connection portion 22b and flows into the flow path switching valve 100 from the third connection portion 130c via the second pipe 26b. The refrigerant having flowed into the flow path switching valve 100 flows from the third port 122c into the second flow path R2 (indicated by the broken line in the flow path switching valve 100 in FIG. 7B), and flows out to the liquidconnection pipe 6 via the fourth port 122d and the fourth connection portion 130d. The high-pressure liquid refrigerant flowing out of the liquid connection pipe 6 flows into the heat source unit 2. The refrigerant that has flowed into the heat source unit 2 flows through the liquid pipe 19d, and when flowing through the expansion valve 16, the refrigerant is decompressed to near the suction pressure of the compressor 10, becomes a refrigerant in a gas-liquid two-phase state, and flows into the heat source heat exchanger 14. The low-pressure refrigerant in the gas-liquid two-phase state that has flowed into the heat source heat exchanger 14 exchanges heat with the air around the heat source unit 2 supplied by the heat source fan 15 and evaporates to become a low-pressure gas refrigerant. The low-pressure gas refrigerant flows into the accumulator 18 via the flow path switching mechanism 12. The low-pressure gas refrigerant having flowed into the accumulator 18 is sucked into the compressor 10 again.

### (2-3-3) Defrost operation

Upon determining that a predetermined defrost start condition is satisfied during the heating operation of the air conditioner 1, the control unit 90 sets the flow path switching mechanism 12 to the first circuit state and controls the actuator 150 of the flow path switching valve 100 to set the state of the valve body 140 to the third state S3 to perform the defrost operation. The defrost operation is an operation for melting and removing frost adhering to the heat source heat exchanger 14 during the heating operation.

Meeting the defrost start condition means that defrosting of the heat source heat exchanger 14 is desirable. For example, the control unit 90 determines that the defrost start condition is satisfied when the refrigerant temperature measured by a temperature sensor (not shown) provided in the heat source heat exchanger 14 becomes equal to or lower than a predetermined temperature. The control unit 90 may determine that the defrost start condition is satisfied when the duration of the heating operation exceeds a predetermined time.

The control unit 90 temporarily stops the compressor 10 before the defrost operation starts. Alternatively, the control unit 90 reduces the number of rotations of the compressor 10 before the defrost operation starts. Thereafter, the control unit 90 brings the flow path switching mechanism 12 into the first circuit state at a predetermined timing. Further, the control unit 90 controls the actuator 150 of the flow path switching valve 100 at a predetermined timing to set the state of the valve body 140 to the third state S3. Then, the control unit 90 operates the compressor 10 (starts defrost operation) at a predetermined number of rotations. When the valve body 140 of the flow path switching valve 100 is in the third state S3, the refrigerant discharged from the compressor 10 flows through the heat source heat exchanger 14 and flows into the flow path switching valve 100 from the liquid connection pipe 6 via the fourth connection portion 130d and the fourth port 122d. The refrigerant having flowed into the flow path switching valve 100 flows through the second flow path R2 (indicated by the broken line in the flow path switching valve 100 in FIG. 7C), and flows out to the gas connection pipe 8 via the first port 122a and the first connection portion 130a. When the valve body 140 of the flow path switching valve 100 is in the third state S3, the refrigerant (the refrigerant whose temperature has decreased by melting the frost in the heat source heat exchanger 14) does not flow into the utilization heat exchanger 22.

The control unit 90 need not stop the utilization fan 24 during the defrost operation. In this case, for example, when a refrigerant having a relatively high temperature remains in the utilization heat exchanger 22, air having a relatively high temperature can be blown into the air conditioning target space even during the defrost operation. However, it is not limited thereto, and the control unit 90 may stop the utilization fan 24 during defrost operation.

Upon determining that a defrost end condition is satisfied during the defrost operation, the control unit 90 determines to end the defrost operation and returns to the heating operation (the control unit 90 sets the flow path switching mechanism 12 to the second circuit state and controls the actuator 150 of the flow path switching valve 100 to set the state of the valve body 140 to the first state S1). For example, the control unit 90 determines that the defrost end condition is satisfied when the refrigerant temperature measured by a temperature sensor (not shown) provided in the heat source heat exchanger 14 becomes equal to or higher than a predetermined end determination temperature and the state continues for a predetermined time or longer.

### (3) Characteristics

(3-1)
The air conditioner 1 includes a refrigerant circuit 50. In the refrigerant circuit 50, the compressor 10, the utilization heat exchanger 22 as an example of the first heat exchanger, the expansion valve 16, and the heat source heat exchanger 14 as an example of the second heat exchanger are connected by refrigerant pipes. The utilization heat exchanger 22 includes a first connection portion 22a and a second connection portion 22b configured as inlet and outlet ports for the refrigerant. The air conditioner 1 includes the flow path switching valve 100 and the control unit 90 as an example of a controller. The flow path switching valve 100 includes the body 120, the valve body 140, and the actuator 150. The first space V1 is formed inside the body 120. The first port 122a, the second port 122b, the third port 122c, and the fourth port 122d configured as inlet and outlet ports for the refrigerant are provided on the wall 122 definiing the first space V1 of the body 120. The valve body 140 is disposed inside the first space V1. The valve body 140 forms the first flow path R1 through which the refrigerant flows. The actuator 150 drives the valve body 140. The control unit 90 controls the actuator 150. In the utilization heat exchanger 22, the refrigerant flows in from the first connection portion 22a and flows out from the second connection portion 22b. The second port 122b communicates with the first connection portion 22a of the utilization heat exchanger 22, and the third port 122c communicates with the second connection portion 22b of the utilization heat exchanger 22. The control unit 90 controls the actuator 150 to switch the state of the valve body 140 to the first state S1 in which the first port 122a and the second port 122b are connected by the first flow path R1, the second state S2 in which the first port 122a and the third port 122c are connected by the first flow path R1, and the third state S3 in which the second port 122b and the third port 122c are connected by the first flow path R1. The second flow path R2 formed in the first space V1 connects the third port 122c and the fourth port 122d in the first state S1, connects the second port 122b and the fourth port 122d in the second state S2, and connects the first port 122a and the fourth port 122d in the third state S3.

In the air conditioner 1, the valve body 140 of the flow path switching valve 100 that controls the flow of the refrigerant flowing through the utilization heat exchanger 22 can be brought into the third state S3 (in other words, the utilization heat exchanger 22 is disconnected from other portions of the refrigerant circuit 50) that connects the inlet port and the outlet port of the refrigerant in the utilization heat exchanger 22. Thus, in the air conditioner 1 according to the first aspect, inflow of the refrigerant into the utilization heat exchanger 22 can be suppressed when the inflow thereto is not desired.

Further, here, by using the space outside the valve body 140 (a part of the first space V1) as a refrigerant flow path, it is possible to implement the compact flow path switching valve 100 capable of taking a connection state of three different flow paths.

Furthermore, in the air conditioner 1, the connection state of three different flow paths can be switched by the single flow path switching valve 100 without using a plurality of valves, and an increase in the number of parts can be suppressed.

(3-2)
In the air conditioner 1, the first flow path R1 includes the internal flow path 144 formed inside the valve body 140. The internal flow path 144 connects the first port 122a and the second port 122b in the first state S1, connects the first port 122a and the third port 122c in the second state S2, and connects the second port 122b and the third port 122c in the third state S3.

In the air conditioner 1, since the internal flow path 144 formed inside the valve body 140 is used as the first flow path R1, it is possible to suppress the refrigerant from flowing out from the first flow path R1 to the outside of the first flow path R1 and the refrigerant from flowing into the first flow path R1 from the outside of the first flow path R1.

(3-3)
In the air conditioner 1, the actuator 150 rotates the valve body 140 around the rotation axis O to switch the state of the valve body 140 among the first state S1, the second state S2, and the third state S3. Thus, in the present air conditioner 1, the connection state of the three different flow paths can be implemented by the flow path switching valve 100 having a relatively simple structure.

(3-4)
In the air conditioner 1, the inner diameter D2 of the fourth port 122d is smaller than the inner diameter D1 of the first port 122a, the inner diameter D1 of the second port 122b, and the inner diameter D1 of the third port 122c.

In the air conditioner 1, since the inner diameter D2 of the fourth port 122d is smaller than those of the other ports 122a to 122c, the degree of freedom in arrangement of the fourth port 122d can be increased. Further, by reducing the diameter of the refrigerant pipe communicating with the fourth port 122d in accordance with the inner diameter D2 of the fourth port 122d, the degree of freedom of the pipe path of the refrigerant pipe connected to the flow path switching valve 100 can be increased.

(3-5)
The air conditioner 1 includes the seal member 160. The seal member 160 is provided so as to surround the opening 122ao of the first port 122a, the opening 122bo of the second port 122b, and the opening 122co of the third port 122c. When the first port 122a, the second port 122b, and the third port 122c are connected to the internal flow path 144, the seal member 160 seals between the openings 122ao, 122bo, and 122co of the ports 122a, 122b, and 122c connected by the internal flow path 144 and the valve body 140.

By providing the seal member 160, it is possible to suppress a situation in which the refrigerant flows out from the ports 122a, 122b, and 122c connected by the internal flow path 144 to the first space V1 around the valve body 140 and a situation in which the refrigerant flows from the first space V1 around the valve body 140 to the ports 122a, 122b, and 122c connected by the internal flow path 144, and thereby achieving the efficient air conditioner 1.

Note that the seal member 160 may not be provided in the fourth port 122d that is not connected to the internal flow path 144 (the first flow path R1).

(3-6)
In the air conditioner 1, the sizes of the seal members 160 provided in the first port 122a, the second port 122b, and the third port 122c may be common. In particular, it is preferable that the inner diameters of the openings of the seal members 160 provided in the first port 122a, the second port 122b, and the third port 122c are at least common.

In the air conditioner 1, by making the size of the seal member 160 common, the same sealing property can be obtained even when the valve body 140 is in any of the first state S1 to the third state S3.

(3-7)
In the air conditioner 1, the first port 122a and the fourth port 122d communicate with each other not via the utilization heat exchanger 22 but via the heat source heat exchanger 14 in which the refrigerant flowing inside and the fluid of the heat source exchange heat. The second port 122b and the third port 122c communicate with each other via the utilization heat exchanger 22 in which the refrigerant flowing inside exchanges heat with the air in the air conditioning target space.

The control unit 90 controls the actuator 150 to switch the valve body 140 to the third state S3 during defrost operation for defrosting the heat source heat exchanger 14.

In the air conditioner 1, by the valve body 140 becoming the third state S3 during the defrost operation, it is possible to suppress occurrence of a situation in which, when the heating operation is required, the utilization heat exchanger 22 and the air in the air conditioning target space that exchanges heat with the utilization heat exchanger 22 are cooled by the refrigerant.

### (4) Modifications

Modifications of the above embodiment will be described below. The following modifications may be appropriately combined as long as there is no contradiction.

### (4-1) Modification A

In the above embodiment, the example in which the valve body 140 is controlled to the third state S3 during the defrost operation has been described. However, the timing of switching the state of the valve body 140 to the third state is not limited to the time of the defrost operation.

For example, the control unit 90 may control the actuator 150 so that the valve body 140 is in the third state S3 after the pump-down operation of recovering the refrigerant to the heat source heat exchanger 14.

More specifically, when the control unit 90 determines that the pump down is necessary or when the air conditioner 1 receives an instruction of the pump-down operation, the control unit sets the flow path switching mechanism 12 to the first circuit state, sets the state of the valve body 140 of the flow path switching valve 100 to the first state S1, closes the expansion valve 16, and operates the compressor 10 to recover the refrigerant from the utilization unit 4 side to the heat source heat exchanger 14. After performing this operation for a predetermined period, the control unit 90 controls the state of the valve body 140 of the flow path switching valve 100 to the third state S3 and stops the operation of the compressor 10. By performing this control, inflow (backflow) of the refrigerant into the utilization heat exchanger 22 can be suppressed.

### (4-2) Modification B

In the above embodiment, an example has been described in which the valve body 140 of the flow path switching valve 100 is a ball type, and the state of the valve body 140 is changed by rotating the valve body 140. However, the present disclosure is not limited to this configuration.

For example, the flow path switching valve may include, as a valve body, a plurality of plates in which holes serving as the first flow path R1 and notches serving as the second flow path R2 are formed, and the plurality of plates may be rotated around a rotation axis orthogonal to the plates to change a relative positional relationship between the holes and the notches of the plurality of plates, thereby implementing the connection state by the first flow path R1 and the second flow path R2 between the ports as described above (the flow path switching valve may be a revolver type). In addition, the flow path switching valve may include, as a valve body, a plurality of plates in which holes serving as the first flow path R1 and notches serving as the second flow path R2 are formed, and slide the plurality of plates to change a relative positional relationship between the holes and the notches of the plurality of plates, thereby implementing the connection state by the first flow path R1 and the second flow path R2 between the ports as described above.

### (4-3) Modification C

In the above embodiment, the example in which the flow path switching valve 100 is provided in the utilization unit 4 has been described, but the position where the flow path switching valve 100 is installed is not limited to the inside of the utilization unit 4. The flow path switching valve 100 may be provided in the heat source unit 2, or may be provided in the connection pipes 6 and 8 separately from the heat source unit 2 and the utilization unit 4.

### (4-4) Modification D

In the above embodiment, an example in which the internal flow path 144 formed inside the valve body 140 of the flow path switching valve 100 functions as the first flow path R1 has been described. However, it is not limited thereto, and at least a part of the first flow path R1 may be a path formed by the valve body 140 and the wall 122 of the body 120 and separated from the second flow path R2.

### <Supplementary note>

The embodiment of the present disclosure has been described above. It will be understood that various changes to modes and details can be made without departing from the gist and scope of the present disclosure recited in the claims.

### REFERENCE SIGNS LIST

- 1: Air conditioner
- 10: Compressor
- 14: Heat source heat exchanger (second heat exchanger)
- 16: Expansion valve
- 22: Utilization heat exchanger (first heat exchanger)
- 22a: First connection portion
- 22b: Second connection portion
- 50: Refrigerant circuit
- 90: Control unit (controller)
- 100: Flow path switching valve
- 120: Body
- 122: Wall
- 122a: First port
- 122ao: Opening
- 122b: Second port
- 122bo: Opening
- 122c: Third port
- 122co: Opening
- 122d: Fourth port
- 140: Valve body
- 144: Internal flow path
- 150: Actuator
- 160: Seal member
- D1: Inner diameter of first port, second port, and third port
- D2: Inner diameter of fourth port
- O: Rotation axis
- R1: First flow path
- R2: Second flow path
- S1: First state
- S2: Second state
- S3: Third state
- V1: First space

### CITATION LIST

### PATENT LITERATURE

Patent Literature 1: Japanese Laid-Open Patent Publication No. S59-170662 A

## Claims

1. An air conditioner (1) comprising a refrigerant circuit (50) in which a compressor (10), a first heat exchanger (22) having a first connection portion (22a) and a second connection portion (22b) configured as inlet and outlet ports for a refrigerant, an expansion valve (16), and a second heat exchanger (14) are connected by a refrigerant pipe,
the air conditioner (1) comprising:
a flow path switching valve (100) including: a body (120) in which a first space (V1) is formed and a first port (122a), a second port (122b), a third port (122c), and a fourth port (122d) configured as inlet and outlet ports for the refrigerant are provided on a wall (122) defining the first space; a valve body (140) disposed inside the first space and forming a first flow path (R1) through which the refrigerant flows; and an actuator (150) configured to drive the valve body; and
a controller (90) configured to control the actuator,
the first heat exchanger being configured such that the refrigerant flows in from the first connection portion and flows out from the second connection portion,
the second port communicating with the first connection portion of the first heat exchanger, and the third port communicating with the second connection portion of the first heat exchanger,
the controller configured to control the actuator to switch a state of the valve body to a first state (S1) in which the first port and the second port are connected by the first flow path, a second state (S2) in which the first port and the third port are connected by the first flow path, and a third state (S3) in which the second port and the third port are connected by the first flow path, and
a second flow path (R2) formed in the first space being configured to connect the third port and the fourth port in the first state, the second port and the fourth port in the second state, and the first port and the fourth port in the third state.

2. The air conditioner according to claim 1, wherein
the first flow path includes an internal flow path (144) formed inside the valve body, and
the internal flow path being configured to connect the first port and the second port in the first state, connect the first port and the third port in the second state, and connect the second port and the third port in the third state.

3. The air conditioner according to claim 1 or 2, wherein
the actuator is configured to rotate the valve body around a rotation axis (O) to switch the state of the valve body among the first state, the second state, and the third state.

4. The air conditioner according to any one of claims 1 to 3, wherein
an inner diameter (D2) of the fourth port is smaller than an inner diameter (D1) of the first port, an inner diameter (D1) of the second port, and an inner diameter (D1) of the third port.

5. The air conditioner according to any one of claims 2 to 4, further comprising
a seal member (160) that is provided so as to surround each of an opening (122ao) of the first port, an opening (122bo) of the second port, and an opening (122co) of the third port, and is configured to seal between the opening and the valve body when the first port, the second port, and the third port are connected to the internal flow path.

6. The air conditioner according to claim 5, wherein
sizes of the seal members provided in the first port, the second port, and the third port are common.

7. The air conditioner according to any one of claims 1 to 6, wherein
the first port and the fourth port communicate with each other not via the first heat exchanger but via the second heat exchanger in which the refrigerant flowing inside and a fluid of a heat source exchange heat, and
the second port and the third port communicate with each other via the first heat exchanger in which the refrigerant flowing inside and air in an air conditioning target space exchange heat.

8. The air conditioner according to claim 7, wherein
the controller is configured to control the actuator to switch the valve body to the third state during defrost operation for defrosting the second heat exchanger.

9. The air conditioner according to claim 7 or 8, wherein
the controller is configured to control the actuator so that the valve body is in the third state after a pump-down operation of recovering the refrigerant to the second heat exchanger.

10. The air conditioner according to any one of claims 1 to 9, wherein
the valve body has a ball shape in which at least a part of an outer surface is a spherical surface.
